# EUROPÄISCHE PATENTSCHRIFT

(11) **EP 0 672 244 B1**
(45) Veröffentlichungstag und Bekanntmachung des Hinweises auf die Patenterteilung: **26.03.1997**
(21) Anmeldenummer: 94902674.4
(22) Anmeldetag: 03.12.1993
(51) Int. Cl.: G01N 21/74

(54) **GRAPHITOFEN FÜR DIE THERMOELEKTRISCHE ATOMISIERUNG VON PROBEN FÜR DIE ATOMABSORPTIONS-SPEKTROSKOPIE**
GRAPHITE OVEN FOR THERMOELECTRICALLY ATOMISING ATOMIC ABSORPTION SPECTROSCOPY SAMPLES
FOUR AU GRAPHITE POUR L'ATOMISATION THERMOELECTRIQUE D'ECHANTILLONS A EXAMINER PAR SPECTROSCOPIE PAR ABSORPTION ATOMIQUE

(30) Priorität: 04.12.1992 DE 4240934
(43) Veröffentlichungstag der Anmeldung: 20.09.1995
(73) Patentinhaber: BODENSEEWERK PERKIN-ELMER GMBH, D-88662 Überlingen (DE)
(72) Erfinder: L'VOV, Boris, V., St. Petersburg, 190068 (RU); FRECH, Wolfgang, S-907 38 Umea (SE)
(74) Vertreter: Grünecker, Kinkeldey, Stockmair & Schwanhäusser Anwaltssozietät
(86) Internationale Anmeldenummer: EP9303407
(87) Internationale Veröffentlichungsnummer: WO9414051

(56) Entgegenhaltungen:
- EP-A- 0 089 079
- EP-A- 0 303 134
- EP-A- 0 311 761
- US-A- 3 817 629

## Beschreibung

### Technisches Gebiet

Die Erfindung betrifft einen Graphitofen für die thermoelektrische Atomisierung von Proben für die Atomabsorptions-Spektroskopie, enthaltend einen rohrförmigen Ofenkörper mit einer Bohrung, deren Querschnitt im Bereich der Enden vermindert ist und der durch einen in Umfangsrichtung, quer zur Längsrichtung der Bohrung zugeführten Strom beheizbar ist.

### Zugrundeliegender Stand der Technik

Graphitöfen dienen in der Atomabsorptions-Spektroskopie dazu, eine Probe zu atomisieren, d.h. einen Atomdampf zu erzeugen, in welchem die Elemente der Probe in atomarem Zustand vorliegen. Durch diesen Atomdampf wird ein Meßlichtbündel geleitet. Das Meßlichtbündel geht von einer linienemittierenden Lichtquelle aus. Das von der Lichtquelle emittierte Linienspektrum ist für ein bestimmtes gesuchtes Element charakteristisch. Dadurch wird das Meßlichtbündel im Idealfall nur von den Atomen dieses Elements absorbiert. Die Absorption, welcher das Meßlichtbündel unterworfen ist, liefert einen Meßwert für die Menge des gesuchten Elements in der Probe.

Bekannte Graphitöfen sind Graphitrohre, die mit ihren Stirnflächen zwischen zwei ringförmigen Kontakten gehalten werden. Durch eine seitliche Eingabeöffnung wird ein Tropfen von Probenlösung in das Graphitrohr eingebracht. Über die Kontakte wird ein starker Strom in Längsrichtung durch das Graphitrohr geleitet. Dadurch wird das Graphitrohr auf eine Atomisierungs-Temperatur erhitzt. Die Probe wird atomisiert. Dadurch bildet sich im Inneren des Graphitrohres eine "Atomwolke" aus, d.h. eine Wolke von Dampf, in welchem die Elemente der Probe in atomarem Zustand vorliegen. Das Meßlichtbündel tritt durch die ringförmigen Kontakte und die Längsbohrung des Graphitrohres.

Eingebrachte flüssige Probe verteilt sich in dem Graphitrohr. Die flüssige Probe kann dabei zu den Enden des Graphitrohres gelangen. Diese Enden sind kühler als der Mittelteil des Graphitrohres. Es kann dann in diesen Bereichen zu einer ungenügenden Atomisierung oder zur Kondensation schwerflüchtiger Bestandteile kommen. Das führt wiederum zu einer Verfälschung der Messung und zu "Memory"-Effekten.

Die Atomwolke verflüchtigt sich durch Diffusion. Die Reste werden schließlich durch einen Schutzgasstrom abgeführt. Während der Atomisierung und der Messung sollte die Atomwolke jedoch möglichst zusammengehalten werden.

Die DE 23 23 774 C3 beschreibt ein Graphitrohr, bei welchem auf der Innenwandung der Längsbohrung ringsherum Stege gebildet sind, welche jeweils eine Querschnittsverminderung der Bohrung des Graphitrohres bewirken. Dadurch soll die Ausbreitung der eingebrachten flüssigen Probe in Längsrichtung des Graphitrohres behindert und die Probe in der heißen Mitte des Graphitrohres gehalten werden.

Es ist auch bekannt, im Inneren eines in Längsrichtung beheizten Graphitrohres im Abstand voneinander ringförmige Vorsprünge vorzusehen, durch welche eine die Probe aufnehmende Plattform gehalten wird.

In dem Buch von L'vov "Atomic Absorption Spectrochemical Analysis", übersetzt von J.H.Dixon, Adam Hilger Ltd, London 1970, Seite 210 ist ein in Längsrichtung beheizter rohrförmiger Ofenkörper beschrieben, der mit Endkappen versehen ist.

Bei allen in Längsrichtung beheizten Graphitrohren ergibt sich notwendig eine über die Länge des Graphitrohres ungleichförmige Erwärmung. Die an den Stirnflächen des Graphitrohres anliegenden Kontakte müssen gekühlt werden. Dadurch fällt die Temperatur des Graphitrohres zu den Enden hin ab. Die Endkappen mit einer im Vergleich zu der Bohrung des Graphitrohres kleinen Öffnung verzögern das Auseinanderfließen der Atomwolke. Dadurch kann sich bei der Atomisierung eine höhere Dichte der atomisierten Probe im Inneren des Graphitrohres ausbilden. Das erhöht die Empfindlichkeit. Bei der von L'vov beschriebenen Anordnung ergab sich eine Erhöhung der Empfindlichkeit um einen Faktor vier.

Es gibt auch Graphitöfen mit einem rohrförmigen Ofenkörper, bei denen der Heizstrom quer zur Achse des Ofenkörpers und zu dem Meßlichtbündel zugeführt wird. Der Heizstrom fließt dann in Umfangsrichtung durch den rohrförmigen Ofenkörpers.

Es ist auch bekannt, bei solchen "querbeheizten" Graphitöfen Endkappen oder mit Öffnungen versehene Endscheiben vorzusehen (Siemer und Frech "Improving the performance of the CRA atomizer by reducing the rate of diffusional atom loss and delaying analyte volatilization" in "Spectrochimica Acta" Bd.39 B (1984) Seiten 261 - 269, und Frech, Cedergren, Lundberg und Siemer "Electrothermal Atomic Absorption Spectroscopy - Present Understanding and Future Needs" in "Spectrochimica Acta" Bd.38 B (1983) Seiten 1435 - 1446).

Bei den dort verwendeten Graphitöfen werden Endscheiben, die jeweils einen zentralen Durchbruch aufweisen, an den Innendurchmesser des rohrförmigen Ofenteils genau angepaßt. Die mit den Endscheiben versehenen Rohre werden "in situ" mit Pyrographit beschichtet. Dabei wird ein guter Kontakt zwischen der Innenwandung des rohrförmigen Ofenteils und den Endscheiben erreicht. Das erleichtert die Wärmeleitung und die direkte Aufheizung der Endscheiben durch den elektrischen Heizstrom. Bei der bekannten Anordnung wird der Heizstrom über getrennte Elektroden von den Seiten her zugeführt. Bei einer anderen Ausführung sind auf dem rohrförmigen Ofenteil Endkappen mit im Vergleich zur Bohrung des Ofenteils kleinen Öffnungen aufgesetzt. Dabei ist es aber nicht möglich, die Stromdichte so zu steuern, daß die Endscheiben oder Endkappen in nahezu gleicher Weise aufgeheizt werden wie der Ofenteil selbst.

Durch die EP 0 303 134 A1 ist weiterhin ein "querbeheizter" Ofen zur elektrothermischen Atomisierung von Proben in der Atomabsorptions-Spektroskopie bekannt, der einen rohrförmigen, elektrisch leitenden Ofenteil und seitliche, diametral gegenüberliegende Kontaktstücke aufweist. Die Kontaktstücke sind mit dem eigentlichen Ofenteil über im wesentlichen trapezförmige Kontaktrippen verbunden. Ofenteil, Kontaktrippen und Kontaktstücke sind aus einem Stück aus Graphit gefertigt. Durch eine Querschnittsverminderung im Mittelteil der Kontaktrippen wird eine gleichmäßige Temperatur des Ofenteils angestrebt.

Solche querbeheizten Graphitöfen zeigen eine relativ homogene Temperaturverteilung im Ofeninneren während der Atomisierung. Dadurch ergibt sich eine weitgehend vollständige Atomisierung der Proben. Es ergeben sich auch geringe "Memory"-Effekte.

Werden mit solchen Graphitöfen Elemente in Gegenwart großer Mengen anderer Metalle wie Gold, Kupfer, Silber oder Palladium bestimmt, so tritt wird das spezifische Signal häufig vermindert. Dieser Effekt beruht darauf, daß sich durch kühlere Gase, die sich an den Enden des Ofenkörpers befinden, eine Partikelwolke ausbildet, in welcher Atome des gesuchten Elements eingefangen werden. Wenn die Probe eine Matrix enthält, die bei der Verdampfung absorbierende Moleküle erzeugt, wird durch die kühleren Zonen an den Enden des Ofenkörpers die nicht spezifische Absorption verstärkt.

Befinden sich in der Nähe der Enden des Ofenkörpers kalte Zonen, beispielsweise Magnete zur Erzeugung eines longitudinalen Zeeman-Effektes (EP 0 365 624 B1), dann kondensieren dort Probenbestandteile, die aus den Enden des Ofenteils herausdiffundieren. Das führt zu unerwünschten Ablagerungen. Bei der Anordnung nach der EP 0 365 624 B1 ist die Länge des Ofenkörpers gering, da der Graphitofen im Luftspalt des Magneten untergebracht werden muß.

### Offenbarung der Erfindung

Der Erfindung liegt die Aufgabe Zugrunde die Empfindlichkeit von Atomabsorptions-Messungen mit elektrothermischer Atomisierung der Probe zu erhöhen.

Der Erfindung liegt weiter die Aufgabe zugrunde, einen Ofen für die elektrothermische Atomisierung so auszubilden, daß einerseits eine gleichmäßige Erhitzung des gesamten Ofenteils gewährleistet ist und andererseits das Herausdiffundieren der gebildeten Probenatome aus dem Ofenteil gehemmt wird.

Erfindungsgemäß wird diese Aufgabe bei einem Graphitofen der eingangs genannten Art dadurch gelöst, daß
(a) an den Ofenkörper seitliche Kontaktansätze integral angeformt sind, die sich über die gesamte Länge des Ofenkörpers erstrecken, und
(b) im Bereich des verminderten Querschnitts der Bohrung der für den Stromfluß zur Verfügung stehende Querschnitt der Kontaktansätze zur Erzielung einer gleichmäßigen Aufheizung des Graphitofens vergrößert ist.

Durch die Querbeheizung über an den Ofenteil angeformte Kontaktansätze wird ein gleichmäßigeres Temperaturverhalten erreicht als es mit längsbeheizten Graphitrohren oder mit Graphitöfen erreichbar ist, die über einzelne Kontakte querbeheizt werden. Der verminderte Querschnitt an den Enden des Ofenteils führt zu einer Verzögerung der Diffusion des gebildeten Atomdampfes nach außen. In Verbindung mit der Querbeheizung, die eine schnelle und vollständige Atomisierung der Probe gewährleistet, ergibt sich daher eine erhöhte Empfindlichkeit der Messung. Das Austreten von Atomdampf an den Enden des Ofenteils wird gebremst. Damit werden auch die vorstehend geschilderten Probleme verringert. Die Verminderung des Querschnitts an den Enden des Ofenteils würde allerdings wieder zu einer Ungleichförmigkeit bei der Aufheizung führen. Dem wird durch eine Veränderung des für den Stromdurchgang zur Verfügung stehenden Querschnitts der Kontaktansätze im Bereich des verminderten Querschnitts der Bohrung kompensiert.

Vorteilhafte Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig. 1: zeigt eine abgebrochene Draufsicht, teilweise im Schnitt, eines querbeheizten Graphitofens zur elektrothermischen Atomisierung von Proben bei der Atomabsorptions-Spektroskopie.
- Fig.2: zeigt einen Schnitt längs der Linie II - II von Fig.1.
- Fig.3: zeigt eine abgebrochene Endansicht des Graphitofens von rechts in Fig.1 und 2 gesehen.
- Fig.4: zeigt eine abgebrochene Draufsicht, teilweise im Schnitt, einer zweiten Ausführung eines Graphitofens zur elektrothermischen Atomisierung von Proben für die Atomabsorptions-Spektroskopie.
- Fig.5: zeigt eine Seitenansicht des Graphitofens von Fig.4 von unten in Fig.4 gesehen.
- Fig.6: zeigt in einer abgebrochenen und teilweise geschnittenen Draufsicht eine dritte Ausführung eines Graphitofens zur elektrothermischen Atomisierung von Proben für die Atomabsorptions-Spektroskopie.

### Bevorzugte Ausführungen der Erfindung

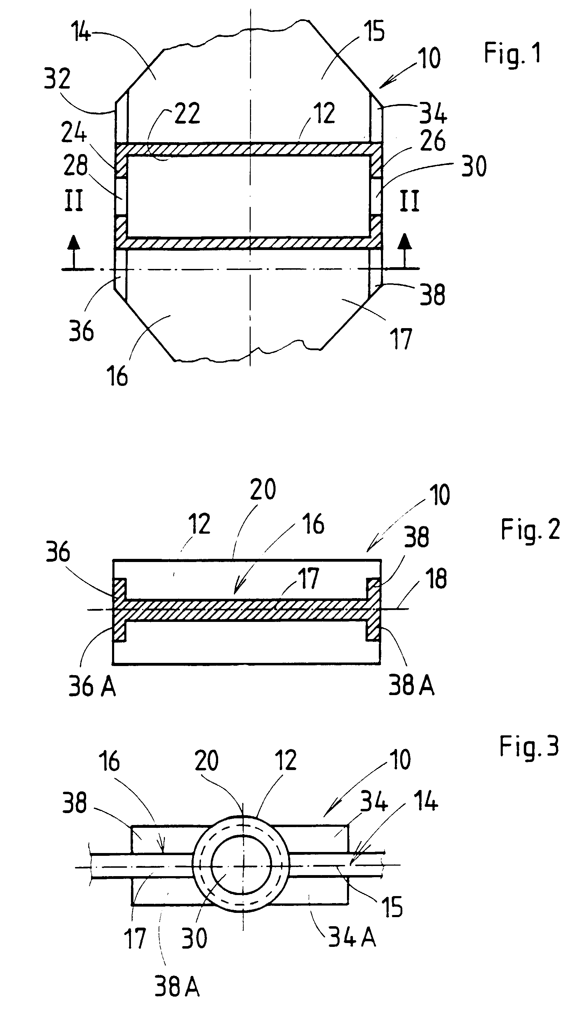

In Fig.1 bis 3 ist mit 10 generell ein Graphitofen bezeichnet. Der Graphitofen 10 enthält einen rohrförmigen, eigentlichen Ofenteil 12 und damit aus einem Stück hergestellte Kontaktansätze 14 und 16. Die Kontaktansätze 14 und 16 erstrecken sich zunächst längs des gesamten Ofenteils 12. Sie sind längs einer gemeinsamen Radialebene 18 auf gegenüberliegenden Seiten des rohrförmigen Ofenteils 12 vorgesehen. Die Kontaktansätze 14 und 16 bilden radiale Rippen 15 bzw. 17, die von dem Ofenteil 12 weg zunehmend schmaler werden und in (nicht dargestellte) Kontaktstücke auslaufen. Über die Kontaktstücke und die Kontaktansätze 14 und 16 kann in bekannter Weise ein Strom in Querrichtung durch den Ofenteil 12 geleitet werden. Eine Probe kann durch eine radiale Eingabeöffnung 20 in den rohrförmigen Ofenteil 12 dosiert werden.

Der Ofenteil 12 weist eine Längsbohrung mit einer Innenwandung 22 auf.

An den beiden Enden des Ofenteils 12 sind Ringscheiben 24 und 26 aus Graphit eingesetzt. Die beiden Ringscheiben 24 und 26 haben fluchtende, zentrale Öffnungen 28 bzw. 30. Die beiden Ringscheiben 24 und 26 sind sehr genau in die Innenwandung 22 des Ofenteils 12 eingepaßt. Nach dem Einsetzen sind Graphitofen 10 und Ringscheiben "in situ" mit Pyrographit beschichtet. Es ergibt sich dabei ein sehr guter Kontakt zwischen Ofenteil 12 und Ringscheiben 24 und 26. Das gewährleistet sowohl einen guten Wärmeübergang als auch einen geringen elektrischen Übergangswiderstand. Der Heizstrom fließt bei Querbeheizung auch durch die Ringscheiben 24 und 26. Die Ringscheiben werden also auch durch Joulesche Wärme beheizt.

Die Rippen 15 und 17 sind an den Rändern im Bereich der Ringscheiben 24 und 26 auf der Oberseite und auf der Unterseite mit Leisten 32, 34, 36, 38 bzw. 32A, 34A, 36A und 38A versehen.

Die Ringscheiben 24 und 26 reduzieren an den Enden des Ofenkörpers 12 den Querschnitt der Bohrung und bremsen dadurch den Austritt des Atomgases aus dem Inneren des Ofenkörpers. Die Leisten 32 bis 38 und 32A bis 38A verringern den elektrischen Widerstand an den Rändern der Rippen 15 und 17. Dadurch fließt beim Aufheizen ein erhöhter elektrischer Strom durch die Enden des Ofenkörpers 12 und durch die Ringscheiben 24 und 26. Dadurch wird der Einfluß der durch die Ringscheiben erhöhten Wärmekapazität der Enden des Ofenkörpers 12 kompensiert. Es wird eine gleichmäßige Aufheizung aller Teile des Ofenkörpers 12 über dessen gesamte Länge hinweg erreicht. Dadurch wird auch die dosierte Probe gleichmäßig atomisiert. Die Konzentration an Probenatomen im Inneren des Ofenkörpers 12 ergibt sich aus einem Gleichgewicht zwischen den aus dem flüssigen in den Atomdampf-Zustand überführten Probenatomen und den Probenatomen, die durch Diffusion aus den Enden des Ofenkörpers 12 austreten. Durch die Kombination der Drosselung des Austritts und der Vergleichmäßigung der Aufheizung über die gesamte Länge des Ofenkörpers hinweg wird dieses Gleichgewicht zu höheren Konzentrationen der Probenatome hin verschoben. Die Drosselung durch die Ringscheiben allein ohne zusätzliche Maßnahmen zur Vergleichmäßigung des Aufheiz-Verhaltens würde wegen der zusätzlichen Masse der Ringscheiben zu einer ungleichförmigen Aufheizung des Ofenkörpers 12 führen.

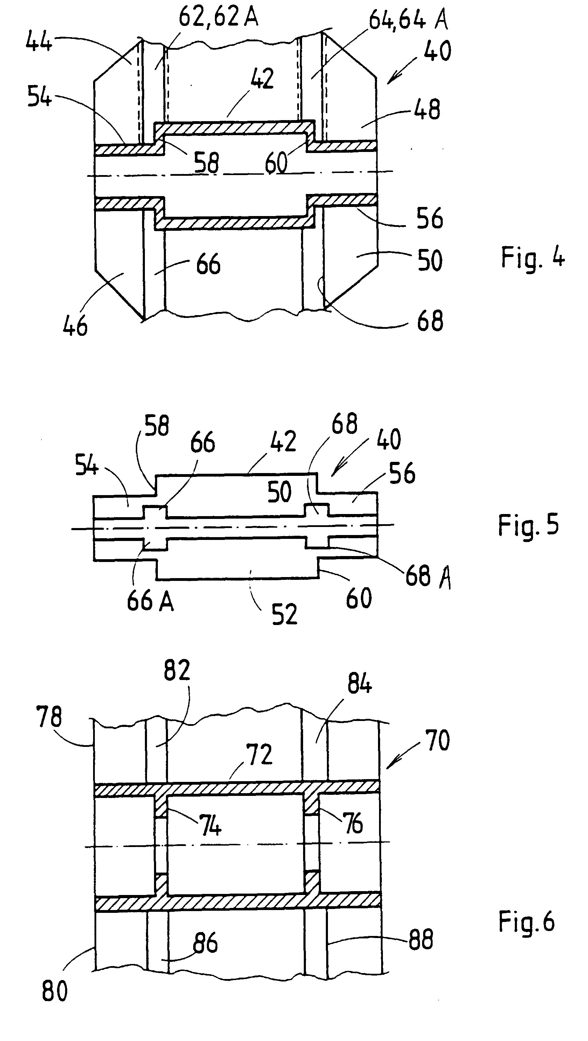

Bei der Ausführung nach Fig.4 und 5 enthält ein Graphitofen 40 einen Ofenkörper 42 und Kontaktansätze 44 und 46. Die Kontaktansätze 44 und 46 sind auf diametral gegenüberliegenden Seiten des Ofenkörpers 42 angeordnet. Die Kontaktansätze 44 und 46 umfassen radiale Rippen 48 bzw. 50, die wie bei der Ausführung von Fig.1 bis 3 von dem Ofenkörper 42 weg schmaler werden und in (nicht dargestellten) Kontaktstücken enden.

Bei der Ausführung von Fig.4 und 5 weist der Ofenkörper 42 einen rohrförmigen Mittelteil 52 von relativ großem Durchmesser und daran anschließende, ebenfalls rohrförmige Endteile 54 und 56 von relativ kleinem Durchmesser auf. Zwischen dem Mittelteil 52 und den Endteilen 54 und 56 sind Ringschultern 58 und 60 gebildet. Auf den Rippen 48 und 50 sind in den Bereichen der Ringschultern 58 und 60 auf der Oberseite und auf der Unterseite radiale Leisten 62, 64, 66 und 68 bzw. 62A, 64A, 66A und 68A angebracht. Diese Leisten vergrößern den für den Stromfluß zur verfügung stehenden Querschnitt in diesen Bereichen und sorgen dadurch für eine gleichmäßige Aufheizung des Ofenteils 42. Die Enden 54 und 56 von vermindertem Durchmesser wirken wieder als Strömungsdrosseln und wirken dem Austritt von Atomdampf aus dem Inneren des Ofenteils 42 entgegen.

Bei der Ausführung nach Fig.6 ist mit 70 ein Graphitofen bezeichnet. Der Graphitofen 70 enthält einen rohrförmigen Ofenteil 72. Der rohrförmige Ofenteil 72 weist auf der Innenseite im Abstand von den Enden nach innen ragende, angeformte Ringe 74 und 76 auf. Die Ringe 74 und 76 bilden drosselnde Querschnitts-Verengungen. An dem Ofenteil 72 sitzen diametral einander gegenüberliegende Kontaktansätze 78, 80 mit radialen Rippen. Auf den Kontaktansätzen 78 und 80 sitzen wieder auf der Oberseite und der Unterseite radiale Leisten, von denen in Fig.6 nur die Leisten 82, 84, 86 und 88 auf der Oberseite sichtbar sind.

Die Ringscheiben 24, 26, die Ringschultern 58, 60 und die Ringe 74 und 76 bewirken zusätzlich eine Versteifung des Graphitofens. In gleichem Sinne wirken die angeformten Leisten 32 bis 38 oder 62 bis 68 bzw. 82 bis 88. Der Graphitofen ist daher stabiler gegen den radialen Druck, mit dem er zwischen stromzuführenden Kontakten gehalten wird.

## Patentansprüche

1. Graphitofen für die thermoelektrische Atomisierung von Proben für die Atomabsorptions-Spektroskopie, enthaltend einen rohrförmigen Ofenkörper (12) mit einer Bohrung, deren Querschnitt im Bereich der Enden vermindert ist und der durch einen in Umfangsrichtung, quer zur Längsrichtung der Bohrung zugeführten Strom beheizbar ist,
**dadurch gekennzeichnet, daß**
(a) an den Ofenkörper (12) seitliche Kontaktansätze (14,16) integral angeformt sind, die sich über die gesamte Länge des Ofenkörpers (12) erstrecken, und
(b) im Bereich des verminderten Querschnitts der Bohrung der für den Stromfluß zur Verfügung stehende Querschnitt der Kontaktansätze (14,16) zur Erzielung einer gleichmäßigen Aufheizung des Graphitofens vergrößert ist.

2. Graphitofen nach Anspruch 1, **dadurch gekennzeichnet, daß** zu Verminderung des Querschnitts in der Bohrung des rohrförmigen Ofenkörpers (12) ringscheibenförmige Drosselkörper (24,26) angeordnet sind.

3. Graphitofen nach Anspruch 2, **dadurch gekennzeichnet, daß** die Drosselkörper (24,26) an den Enden des rohrförmigen Ofenkörpers (12) vorgesehen sind.

4. Graphitofen nach Anspruch 2, **dadurch gekennzeichnet, daß** die Drosselkörper (74,76) gegenüber den Enden des rohrförmigen Ofenkörpers (72) einwärts versetzt angeordnet sind.

5. Graphitofen nach Anspruch 3 oder 4, **dadurch gekennzeichnet, daß**
(a) die seitlichen Kontaktansätze (14,16) radiale Rippen (15,17) längs einer die Achse des rohrförmigen Ofenkörpers (12) enthaltenden Ebene (18) bilden, welche längs der gesamten Länge des Ofenkörpers (12) an diesen angeformt sind und
(b) im Bereich der Drosselkörper (24,26) an den Rippen (15,17) Verstärkungsleisten (32,34,36,38;32A,34A,36A,38A) angeformt sind, durch welche die Vergrößerung des für den Stromfluß zur Verfügung stehenden Querschnitts erreicht wird.

6. Graphitofen nach Anspruch 1, **dadurch gekennzeichnet, daß** die Bohrung des rohrförmigen Ofenkörpers (42) an den Enden Abschnitte (54,56) von vermindertem Durchmesser aufweist.

7. Graphitofen nach Anspruch 6, **dadurch gekennzeichnet, daß** dir Wandung des Ofenkörpers (42) im Abstand von den Enden unter Bildung von Ringschultern (58,60) nach innen eingezogen ist.

8. Graphitofen nach Anspruch 7, **dadurch gekennzeichnet, daß**
(a) die seitlichen Kontaktansätze (44,46) radiale Rippen längs einer die Achse des rohrförmigen Ofenkörpers (42) enthaltenden Ebene bilden, welche längs der gesamten Länge des Ofenkörpers (42) an diesen angeformt sind und
(b) im Bereich der Ringschultern (58,60) an den Rippen radiale Verstärkungsleisten (62,64,66,68; 62A,64A,66A,68A) angeformt sind, durch welche die Vergrößerung des für den Stromfluß zur Verfügung stehenden Querschnitts erreicht wird.

## Claims

1. A graphite furnace for thermoelectric atomisation of specimens for atomic absorption spectroscopy, comprising a tubular body (12) with a bore having a reduced cross-section in the region of the ends and heatable by a current supplied in the peripheral direction transversely to the longitudinal direction of the bore,
characterised in that
a) lateral contact attachments (14, 16) are integrally formed on the furnace body (12) and extend along the entire length of the furnace body (12), and
b) in the reduced cross-section region of the bore, the cross-section of the contact attachments (14, 16) available for the current to flow is increased, in order uniformly to heat the graphite furnace.

2. A graphite furnace according to claim 1,
characterised in that in order to reduce the cross-section, annular throttle members (24, 26) are disposed in the bore of the tubular furnace body (12).

3. A graphite furnace according to claim 2,
characterised in that the throttle members (24, 26) are provided at the ends of the tubular furnace body (12).

4. A graphite furnace according to claim 2,
characterised in that the throttle members (74, 76) are offset inwards relatively to the ends of the tubular furnace body (72).

5. A graphite furnace according to claim 3 or 4,
characterised in that
(a) the lateral contact attachments (14, 16) form radial ribs (15, 17) along a plane (18) containing the axis of the tubular furnace body (12) and integrally formed on the furnace body (12) along the entire length thereof and
(b) reinforcing strips (32, 34, 36, 38; 32A, 34A, 36A, 38A) are integrally formed on the ribs (15, 17) in the region of the throttle members (24, 26) so as to increase the cross-section available for the current to flow.

6. A graphite furnace according to claim 1,
characterised in that the bore of the tubular furnace body (42) has reduced-diameter portions (54, 56) at its ends.

7. A graphite furnace according to claim 6,
characterised in that the wall of the furnace body (42) is contracted inwards at a distance from the ends, forming annular shoulders (58, 60).

8. A graphite furnace according to claim 7,
characterised in that
a) the lateral contact attachments (44, 46) form radial ribs along a plane containing the axis of the tubular furnace body (42) and integrally formed on the furnace body (42) along the entire length thereof, and
b) radial reinforcing strips (62, 64, 66, 68; 62A, 64A, 66A, 68A) are integrally formed on the ribs in the region of the annular shoulders (58, 60) so as to increase the cross-section available for the current to flow.

## Revendications

1. Four en graphite pour l'atomisation électrothermique d'échantillons destinés à la spectroscopie par absorption atomique, comprenant un corps de four tubulaire (12) pourvu d'un perçage dont la section transversale est réduite dans la région des extrémités, et pouvant être chauffé par un courant amené dans la direction du pourtour, transversalement par rapport à la direction longitudinale du perçage, caractérisé par le fait que :
a) sur le corps de four (12) sont formés d'un seul tenant des prolongements de contact latéraux (14, 16) qui s'étendent sur la totalité de la longueur du corps de four (12), et :
b) dans la région de la section transversale réduite du perçage, la section transversale des prolongements de contact (14, 16) qui est disponible pour l'écoulement du courant est augmentée en vue d'atteindre un chauffage uniforme du four en graphite.

2. Four en graphite selon la revendication 1, caractérisé par le fait qu'en vue de diminuer la section transversale, des corps d'étranglement (24, 26) en forme de disques annulaires sont disposés dans le perçage du corps de four tubulaire (12).

3. Four en graphite selon la revendication 2, caractérisé par le fait que les corps d'étranglement (24, 26) sont prévus aux extrémités du corps de four tubulaire (12).

4. Four en graphite selon la revendication 2, caractérisé par le fait que les corps d'étranglement (74, 76) sont disposés en étant décalés vers l'intérieur par rapport aux extrémités du corps de four tubulaire (72).

5. Four en graphite selon la revendication 3 ou 4, caractérisé par le fait que :
a) les prolongements de contact latéraux (14, 16) forment, le long d'un plan (18) contenant l'axe du corps de four tubulaire (12), des ailes radiales (15, 17) qui sont formées sur le corps de four (12), le long de la totalité de la longueur de celui-ci, et :
b) dans la région des corps d'étranglement (24, 26) sont formées sur les ailes (15, 17) des nervures de renforcement (32, 34, 36, 38 ; 32A, 34A, 36A, 38A) au moyen desquelles on obtient l'augmentation de la section transversale qui est disponible pour l'écoulement du courant.

6. Four en graphite selon la revendication 1, caractérisé par le fait que le perçage du corps de four tubulaire (42) présente à ses extrémités des parties (54, 56) dont le diamètre est réduit.

7. Four en graphite selon la revendication 6, caractérisé par le fait que la paroi du corps de four (42) présente un ressaut vers l'intérieur à distance des extrémités en formant des épaulements annulaires (58, 60).

8. Four en graphite selon la revendication 7, caractérisé par le fait que :
a) les prolongements de contact latéraux (44, 46) forment, le long d'un plan contenant l'axe du corps de four tubulaire (42), des ailes radiales qui sont formées sur le corps de four (42), le long de la totalité de la longueur de celui-ci, et :
b) dans la région des épaulements annulaires (58, 60) sont formées sur les ailes des nervures de renforcement radiales (62, 64, 66, 68 ; 62A, 64A, 66A, 68A) au moyen desquelles on obtient l'augmentation de la section transversale qui est disponible pour l'écoulement du courant.
